# EUROPEAN PATENT SPECIFICATION

(11) **EP 3 559 126 B1**
(45) Date of publication and mention of the grant of the patent: **29.09.2021**
(21) Application number: 17822239.4
(22) Date of filing: 14.12.2017
(51) Int. Cl.: C09D 127/16, C08L 33/12

(54) **FLUOROPOLYMER BASED POWDER COATING**
AUF FLUORPOLYMER BASIERENDE PULVERBESCHICHTUNG
REVÊTEMENT EN POUDRE À BASE DE FLUOROPOLYMÈRE

(30) Priority: 20.12.2016 FR 1662883
(43) Date of publication of application: 30.10.2019
(73) Proprietor: Arkema France, 92700 Colombes (FR)
(72) Inventor: ABGRALL, Florent, 27300 Bernay (FR); BONNET, Anthony, 69720 Saint-Laurent-De-Mure (FR); DEVISME, Samuel, 76000 Rouen (FR); FINE, Thomas, Shanghai 200135 (FR); FUKUYAMA, Takehiro, Suita City Osaka 564-0028 (JP)
(74) Representative: Arkema Patent
(86) International application number: PCT/EP2017/082859
(87) International publication number: WO 2018/114608

(56) References cited:
- EP-A2- 0 259 290
- US-A- 5 177 150

## Description

### INVENTION AREA

The invention relates to fluorinated-acrylic thermoplastic compositions, to powder coatings made of such compositions, and to a process for preparing said powder coatings.

### BACKGROUND OF THE INVENTION

Typical thermoplastic fluoropolymer powder coatings are characterized by degrees of mechanical performance and surface roughness or "orange peel" associated with the finish. "Orange peel" may be reduced through various approaches. While the resin melt viscosity may be reduced in order to combat orange peel, melt viscosity reduction generally has an adverse effect on the mechanical properties of the coating, particularly impact resistance, flexibility, and crack resistance.

Powder coatings of polyvinylidene fluoride (PVDF) and copolymers of vinylidene fluoride (VDF) containing at least 90 wt. % VDF are disclosed in U.S. 4,770,939. The PVDF-based resin disclosed in the aforesaid patent for powder coatings has a melt viscosity according to ASTM D3835 of 6 to 7 kilopoise at 230°C. A minor amount of a low molecular weight acrylic polymer is required as a flow improving agent.

Document US 5,177,150 discloses powder coatings formulated from PVDF characterized by melt viscosity as low as from 1 to 4 kilopoise, claiming that the inclusion of flow-improving agents is thus unnecessary. However, the powder coating composition needs cryogenic grinding to obtain small particle size powders (20 µm or less) at high output.

Thus, there exists a need to develop powder coating compositions that present good mechanical properties and weathering resistance, without the use of flow improving agents, and by means of a simplified manufacturing process that no longer needs to use liquid nitrogen for the grounding step. It has now been found that by using compositions made of fluorinated polymers having a melt viscosity under 1 kilopoise and acrylic polymers, powder coatings can be efficiently grounded at room temperature, while showing good mechanical properties and excellent weather resistance.

### SUMMARY OF THE INVENTION

The invention relates first to a composition consisting of:
a. 50-95 weight % of a thermoplastic fluoropolymer, and
b. 5-50 weight % of an acrylic polymer,
wherein the fluoropolymer has a melt viscosity of from 0.04 to below 1 kilopoise (kP) measured at 100 sec⁻¹ and 230°C by using ASTM D3835.

Another subject matter of the invention is a powder coating composition comprising the composition described above, at least a pigment and optionally some additives selected from UV absorbers, light stabilizers, matting agents, leveling agents, degassing agents, flowing agents, wetting agents, and impact modifiers.

Another subject matter of the invention is a process for preparing a powder coating using the powder coating composition of the invention.

Another subject matter of the invention is a coating obtained from the curing of at least one powder coating composition according to the invention.

### DETAILED DESCRIPTION OF THE INVENTION

The invention is now described in more detail and without implied limitation in the description which follows.

The invention relates first to a composition consisting of:
a. 50-95 weight % of a thermoplastic fluoropolymer, and
b. 5-50 weight % of an acrylic polymer,
wherein the fluoropolymer has a melt viscosity of from 0.04 to below 1 kilopoise measured at 100 sec⁻¹ and 230°C by using ASTM D3835.

The term fluoropolymer thus denotes any polymer or blend of polymers that has in its chain at least one monomer chosen from molecules containing a vinyl group capable of opening in order to be polymerized and that contains, directly attached to this vinyl group, at least one fluorine atom, at least one fluoroalkyl group or at least one fluoroalkoxy group.

As examples of monomers, mention may be made of vinyl fluoride; vinylidene fluoride (VDF); trifluoroethylene (VF3); chlorotrifluoroethylene (CTFE); 1,2-difluoroethylene; tetrafluoroethylene (TFE); hexafluoropropylene (HFP); perfluoro(alkyl vinyl) ethers, such as perfluoro(methyl vinyl) ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); the product of formula CF2=CFOCF2CF(CF3)OCF2CF2X in which X is SO₂F, CO₂H, CH₂OH, CH₂OCN or CH₂OPO₃H; the product of formula CF₂=CFOCF₂CF₂SO₂F; the product of formula F(CF₂)nCH₂OCF=CF₂ in which n is 1, 2, 3, 4 or 5; the product of formula R₁CH₂OCF=CF₂ in which R₁ is hydrogen or F(CF₂)z and z is 1, 2, 3 or 4; the product of formula R₃OCF=CH₂ in which R₃ is F(CF₂)z- and z is 1, 2, 3 or 4; perfluorobutylethylene (PFBE) ; 3,3,3-trifluoropropene and 2-trifluoromethyl-3,3,3-trifluoro-1-propene.

The fluoropolymer may be a homopolymer or a copolymer; it may also contain non-fluorinated monomers such as ethylene.

For example, the fluoropolymer is chosen from:
- homopolymers and copolymers of vinylidene fluoride (VDF) preferably containing at least 50% by weight of VDF, the comonomer being chosen from chlorotrifluoroethylene (CTFE), hexafluoropropylene (HFP), trifluoroethylene (VF3) and tetrafluoroethylene (TFE);
- homopolymers and copolymers of trifluoroethylene (VF3); and
- copolymers, and especially terpolymers, that combine the residues of the chlorotrifluoroethylene (CTFE), tetrafluoroethylene (TFE), hexafluoropropylene (HFP) and/or ethylene units and optionally VDF and/or VF3 units.

Advantageously, the fluoropolymer is polyvinylidene fluoride (PVDF) homopolymer or copolymer. Preferably, the PVDF contains at least 50%, more preferably at least 75% and even better at least 85% VDF by weight. In one embodiment, the comonomer is HFP. In another embodiment, the comonomer is TFE.

Characteristically, the fluoropolymer has a viscosity ranging from 0.04 to less than 1 kilopoise, measured at 100 sec⁻¹ and 230°C by using ASTM D3835.

The term "acrylic polymer" denotes homopolymers of methyl methacrylate or copolymers of methyl methacrylate (MMA) and at least one other monomer copolymerizable with MMA, these copolymers containing at least 50% MMA by weight. As examples of comonomers copolymerizable with MMA, mention may be made of alkyl (meth)acrylates, itaconic acid, (meth)acrylonitrile, vinyl versatate, butadiene, styrene and isoprene. Advantageously, the acrylic polymer contains, by weight, preferably 5 to 15% of a C1-C20 alkyl (meth)acrylate, which is preferably methyl acrylate and/or ethyl acrylate. The acrylic polymer may also be functionalized; that is to say the copolymer contains units of MMA and a second comonomer of general form: 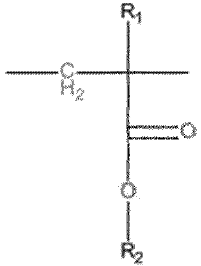 in which:
R₁ denotes H or -CH3;
R₂ denotes H, or a linear or branched alkyl containing from 1 to 20 carbon atoms with functional groups attached. Examples of such functional groups, which in most instances contain heteroatoms (atoms that are neither carbon nor hydrogen), include carboxylic acids, sulfonic or sulfuric acids, phosphonic or phosphoric acids, hydroxyl groups, esters, ketones, ketoesters, amides, urethanes, thiols, siloxanes, fluoroalkyls, acetoacetates, oxiranes; also vinylically unsaturated groups such as vinyl esters or ethers, allyl esters or ethers, acetylenic groups, dienes, malonates.

Especially advantageous are acrylic copolymers containing 0.5-20 % by weight of an acid functional monomer or its anhydride derivatives, for instance: 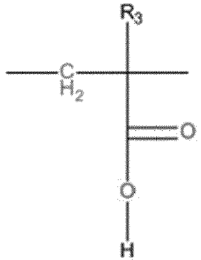 in which:
R₃ denotes H or methyl; or for anhydride derivatives, structures of the form: 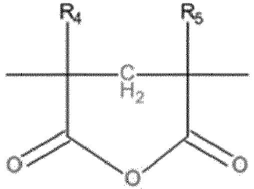 in which R₄ and R₅, which are identical or different, denote H or methyl. The proportion of functional comonomers may be from 0 to 25% by weight, preferably from 5 to 20% of the acrylic polymer including the possible functional groups.

According to a second subject matter, the invention relates to a powder coating composition comprising the thermoplastic composition described above, at least a pigment and optionally some additives selected from UV absorbers, light stabilizers, matting agents, leveling agents, degassing agents, flowing agents, wetting agents, and impact modifiers.

The powder coating composition contains one or more pigments. The pigment may be organic or inorganic. According to one embodiment, the pigment component may comprise titanium dioxide, or titanium dioxide in combination with one or more other inorganic pigments wherein titanium dioxide comprises the major part of the combination. Inorganic pigments which may be used alone or in combination with titanium dioxide include, for example, silica; iron oxides of various colors; lead titanate; and various silicates, for example, talc, diatomaceous earth asbestos, mica, clay and basic lead silicate. Pigments which may be used in combination with titanium dioxide include, for example, zinc oxide, zinc sulfide, zirconium oxide, white lead, carbon black, lead chromate, leafing and non-leafing metallic pigments, molybdate orange, calcium carbonate and barium sulfate. The pigment component is advantageously present in the powder coating composition in the amount of from about 5 to about 30 parts by weight.

The powder coating composition may contain one or more additives which are not pigments. Example of these additives are UV absorbers, light stabilizers, matting agents, leveling agents, degassing agents, flowing agents, wetting agents, and impact modifiers.

Any of the additives contained in the powder coating may be organic or inorganic. They can be used one type alone or in combination of two or more types. Some examples of UV absorbers include, benzotriazoles, oxalic acid diarylamides, and 2-hydroxy benzophenone. Suitable light stabilizers include, for example, hindered amines, such as poly(alkanoyl piperidine alcohols), e.g. oligomers of dimethyl succinate with 4-hydroxy tetramethyl piperidine ethanol, hindered phenols, or combinations thereof. Some examples of matting agents include silica and wax. Examples of leveling agents include copolymer of VDF and HFP with melting point lower than 130°C, ester gum, and silicon oil. Examples of degassing agents include benzoin. Example of the flowing agents include silica and fumed alumina. Silica can also be used as wetting agent. The impact modifier can be preferably of a core-shell type.

The powder coating composition consists of particles having an average size ranging from 10 to 50 µm, preferably from 15 to 30 µm.

Another subject matter of the invention is a process for preparing a powder coating using the powder coating composition of the invention, said process comprising the steps of:
i. preparing a mixture of the thermoplastic fluoropolymer, acrylic polymer, pigment and optionally additives by blending these components then pelletizing or sheet extruding the mixture;
ii. grinding the pellets thus obtained in a hammer mill at room temperature to obtain a powder;
iii. collecting the powder by using a sieve with an opening of 50 µm;
iv. applying the powder to a substrate then subject it to a heat treatment in order to form a coating.

The powder coating composition of fluoropolymer, acrylic resin and pigment is melt-mixed by extrusion, such as in a twin-screw extruder operating in the range of from 160°C to 210°C. The extruded mixture is thereafter pelletized or extruded into sheets by conventional techniques.

In the next step, the pellets are ground into a powder according to conventional techniques, preferably by using a hammer mill. The resulting raw powder is classified to the desired particle size by passage through the appropriately sized sieve, ranging from 10 to 100 µm, preferably from 15 to 80 µm, more preferably from 15 to 30 µm.

The powder coatings according to the invention can be efficiently ground to particles with average size of 10 to 50 µm at room temperature without the use of cryogenic techniques of grinding. This allows to have an easier handling of the pellets, and ensures lower cost of the global process.

The resulting powder is then applied to a substrate according to any means suitable for obtaining an even distribution of powder. Electrostatic application is the preferred method of application, at an electrical voltage comprised between 25 and 100 V.

The substrate is selected from metals such as iron, aluminum, and manganese and is preferably made of aluminum. The surface of aluminum substrates may be oxidized or chemically treated, but is preferably chromated to have optimum adhesion with the powder coating according to the invention. The substrate can be coated with a primer such an epoxy type resin, prior to coating by the fluoropolymer powder coating.

Following application, the powder coating is subjected to a heat treatment sufficient to melt the powder coating. The temperature used should be higher than the melting point of the powder.

In one embodiment, the coating is baked at a temperature comprised between 220 and 260°C for a duration comprised between 5 to 20 minutes. The coating and its substrate are thereafter cooled by any suitable means.

In another embodiment, the heat treatment consists in immersing the coated substrate in boiling water for 4 to 6 hours.

Another subject of the present invention is a substrate coated with a coating as defined above according to the present invention. The coating thickness is preferably, but not limited to, 30∼1000 µm. The substrate may be used in applications such as curtain walls of high rise buildings, traffic signage, and outdoor units of air conditioners.

### EXAMPLES

### Example 1

52.5 wt% of PVDF homopolymer having a melt viscosity of 0.2 kP measured at 100 sec⁻¹, 230°C according to ASTM D3835 is added to 22.5wt% of PMMA resin comprising of 90:10 methylmethacrylate and glutaric anhydride copolymer. Also added to the mixture is 25 wt% of TiO2. The mixture is blended in a twin screw mixer operating at a range of 160°C to 210°C, and pelletized. The pellets are directly grinded in a hammer mill at room temperature. The particle size distribution of the resulting powder is measured by Microtrac 3000 apparatus with water as the media. The powder is electrostatically applied at 50 kV onto a substrate of chromated aluminum. The panels are then baked at 250°C for 15 minutes.

The coated panels are evaluated by the methods indicated below in Table 1.

**Table 1**

| Characterization | Result | Method |
|---|---|---|
| Adhesion | 100/100 | ASTM D3359 |
| Boiling water adhesion | 100/100 | Immerse coated panel in boiling water for 5 hours then test under ASTM D3359 |
| Weathering | >80 % gloss retention | Age coating by QUV-B under ASTM G53 for 1000 hours and measure 60 degree gloss according to ASTM D523. Compare against initial gloss |

### Example 2

Same procedure in as example 1 except for the composition of the fluoropolymer. 47.5 wt% of the formulation remain PVDF homopolymer having a melt viscosity of 0.2 kP measured at 100 sec⁻¹, 230°C according to ASTM D3835 and 5 wt% is replaced with a VDF/HFP copolymer having a melt viscosity of 25 kP measured at 100 sec⁻¹, 230°C according to ASTM D3835. The global viscosity of the fluoropolymer phase is 0.9 kP (measured at 100 sec⁻¹, 230°C according to ASTM D3835).

### Comparative Example 3

Same procedure as in example 1 was used, except for the PVDF homopolymer which has a melt viscosity of 6 kP measured at 100 sec⁻¹, 230°C according to ASTM D3835 instead of the 0.2 kP PVDF homopolymer, and a copolymer of MMA and ethyl acrylate was used in place of the MMA/glutaric anhydride 90/10 acrylic copolymer.

### Comparative Example 4

Same procedure as in example 1 was used, except for the PVDF homopolymer which has a melt viscosity of 3.5 kP measured at 100 sec⁻¹, 230°C according to ASTM D3835 instead of the 0.2 kP PVDF homopolymer.

Evaluation results are given in Table 2.

**Table 2**

| | Ex.1 | Ex. 2 | Comp. ex. 3 | Comp. ex. 4 |
|---|---|---|---|---|
| Adhesion | Pass | Pass | Fail | Pass |
| Boiling water adhesion | Pass | Pass | Fail | Fail |
| Weathering | Pass | Pass | Pass | Pass |
| <50 µm | 27 % | 26 % | 10% | 7% |
| 50-100 µm | 57 % | 56 % | 50% | 55 % |
| >100 µm | 16 % | 18 % | 40 % | 38 % |

These data show that fluoropolymer viscosities below to 1 kP (as in examples 1 & 2) allows better grindability vs comparative examples 3 and 4. Low particle size can be achieved with a grinding process at room temperature which is a major advantage in term of grinding cost and productivity. It is interesting to notice that the main applicative properties for a coating remain achieved with the compositions of examples 1 and 2.

## Claims

1. A composition consisting of:
a. 50-95 weight % of one or more thermoplastic fluoropolymer, and
b. 5-50 weight % of an acrylic polymer,
wherein the fluoropolymer has a melt viscosity of from 0.04 to below 1 kP measured at 100 sec⁻¹ and 230°C by using ASTM D3835.

2. The composition according to claim 1 wherein said fluoropolymer is chosen from: homopolymers and copolymers of vinylidene fluoride (VDF) containing at least 50% by weight of VDF, the comonomer being chosen from chlorotrifluoroethylene, hexafluoropropylene, trifluoroethylene and tetrafluoroethylene; homopolymers and copolymers of trifluoroethylene; and copolymers, especially terpolymers, that combine the residues of the chlorotrifluoroethylene, tetrafluoroethylene, hexafluoropropylene and/or ethylene units and optionally VDF and/or trifluoroethylene units.

3. The composition according to one of claims 1 or 2 wherein the fluoropolymer is polyvinylidene fluoride (PVDF) homopolymer or a copolymer of vinylidene fluoride with hexafluoropropylene or tetrafluoroethylene.

4. The composition according to one of claims 1 to 3 wherein said acrylic polymer is a homopolymer of a methylmethacrylate (MMA) or a copolymer of methyl methacrylate and at least one other monomer copolymerizable with MMA, these copolymers containing at least 50% MMA by weight.

5. A powder coating composition comprising the composition according to any of the preceding claims, and also comprises from 5 to 30% by weight of a pigment.

6. The powder coating composition according to claim 5 wherein said pigment is selected from titanium dioxide, iron oxides, lead titanate, and silicates.

7. The powder coating composition according to any of claims 5 or 6, wherein said composition further comprises at least an additive selected from UV absorbers, light stabilizers, matting agents, leveling agents, degassing agents, flowing agents, wetting agents, and impact modifiers.

8. The powder coating composition according to any of claims 5 to 7 wherein said composition consists of particles having an average size ranging from 10 to 100 µm, preferably from 15 to 80 µm, more preferably from 15 to 30 µm.

9. Process for preparing the powder coating using the powder coating composition according to any of claims 5 to 8, said process comprising the steps of :
i. Preparing a mixture of the thermoplastic fluoropolymer, acrylic polymer, pigment and optionally additives by blending these components then pelletizing or sheet extruding the mixture;
ii. grinding the pellets thus obtained in a hammer mill at room temperature to obtain a powder;
iii. collecting the powder by using a sieve with an opening of 50 µm;
iv. applying the powder to a substrate then subject it to a heat treatment in order to form a coating.

10. Process according to any of claims 8 or 9 wherein the substrate is made of aluminum or chromated aluminum.

11. Process according to any of claims 9 to 10 wherein the heat treatment consists in baking the coated substrate at a temperature comprised between 220 and 260°C for a duration comprised between 5 to 20 minutes.

12. Process according to any of claims 9 to 11 wherein the obtained coating has a thickness ranging from 30 to 1000 µm.

13. Coating **characterized in that** it results from the curing of at least one powder coating composition as defined according to any one of claims 5 to 8.

## Patentansprüche

1. Zusammensetzung, bestehend aus:
a. 50-95 Gew.-% eines oder mehrerer thermoplastischer Fluorpolymere und
b. 5-50 Gew.-% eines Acrylpolymers,
wobei das Fluorpolymer eine bei 100 s⁻¹ und 230 °C nach ASTM D D3835 gemessene Schmelzeviskosität von 0,04 bis unter 1 kP aufweist.

2. Zusammensetzung nach Anspruch 1, wobei das Fluorpolymer ausgewählt ist aus: Homopolymeren und Copolymeren von Vinylidenfluorid (VDF), die mindestens 50 Gew.-% VDF enthalten, wobei das Comonomer aus Chlortrifluorethylen, Hexafluorpropylen, Trifluorethylen und Tetrafluorethylen ausgewählt ist; Homopolymeren und Copolymeren von Trifluorethylen und Copolymeren, insbesondere Terpolymeren mit kombinierten Resten der Chlortrifluorethylen-, Tetrafluorethylen-, Hexafluorpropylen- und/oder Ethyleneinheiten und gegebenenfalls VDF- und/oder Trifluorethyleneinheiten.

3. Zusammensetzung nach Anspruch 1 oder 2, wobei es sich bei dem Fluorpolymer um Polyvinylidenfluorid-(PVDF)-Homopolymer oder ein Copolymer von Vinylidenfluorid mit Hexafluorpropylen oder Tetrafluorethylen handelt.

4. Zusammensetzung nach einem der Ansprüche 1 bis 3, wobei es sich bei dem Acrylpolymer um ein Homopolymer von Methylmethacrylat (MMA) oder ein Copolymer von Methylmethacrylat und mindestens einem anderen Monomer, das mit MMA copolymerisierbar ist, wobei diese Copolymere mindestens 50 Gew.-% MMA enthalten, handelt.

5. Pulverlackzusammensetzung, umfassend die Zusammensetzung nach einem der vorhergehenden Ansprüche sowie 5 bis 30 Gew.-% eines Pigments.

6. Pulverlackzusammensetzung nach Anspruch 5, wobei das Pigment aus Titandioxid, Eisenoxiden, Bleititanat und Silikaten ausgewählt ist.

7. Pulverlackzusammensetzung nach Anspruch 5 oder 6, wobei die Zusammensetzung ferner mindestens ein Additiv umfasst, das aus UV-Absorbern, Lichtschutzmitteln, Mattierungsmitteln, Verlaufsmitteln, Entgasungsmitteln, Fließmitteln, Netzmitteln und Schlagzähigkeitsmodifikatoren ausgewählt ist.

8. Pulverlackzusammensetzung nach einem der Ansprüche 5 bis 7, wobei die Zusammensetzung aus Teilchen mit einer durchschnittlichen Größe im Bereich von 10 bis 100 µm, vorzugsweise von 15 bis 80 µm, weiter bevorzugt von 15 bis 30 µm, besteht.

9. Verfahren zur Herstellung des Pulverlacks unter Verwendung der Pulverlackzusammensetzung nach einem der Ansprüche 5 bis 8, wobei das Verfahren folgende Schritte umfasst:
i. Herstellen einer Mischung aus dem thermoplastischen Fluorpolymer, dem Acrylpolymer, dem Pigment und gegebenenfalls Additiven durch Mischen dieser Komponenten und anschließendes Pelletieren oder Folienextrudieren der Mischung;
ii. Mahlen der so erhaltenen Pellets in einer Hammermühle bei Raumtemperatur zum Erhalt eines Pulvers;
iii. Sammeln des Pulvers durch Verwendung eines Siebs mit einer Öffnung von 50 µm;
iv. Aufbringen des Pulvers auf ein Substrat und anschließendes Wärmebehandeln des Substrats zur Bildung eines Lacks.

10. Verfahren nach Anspruch 8 oder 9, wobei das Substrat aus Aluminium oder chromatiertem Aluminium besteht.

11. Verfahren nach einem der Ansprüche 9 bis 10, wobei die Wärmebehandlung darin besteht, dass das lackierte Substrat bei einer Temperatur zwischen 220 und 260 °C für eine Dauer zwischen 5 und 20 Minuten gebrannt wird.

12. Verfahren nach einem der Ansprüche 9 bis 11, wobei der erhaltene Lack eine Dicke im Bereich von 30 bis 1000 µm aufweist.

13. Lack, **dadurch gekennzeichnet, dass** er sich aus dem Härten mindestens einer Pulverlackzusammensetzung gemäß einem der Ansprüche 5 bis 8 ergibt.

## Revendications

1. Composition constituée de :
a. 50-95 % en poids d'un ou de plusieurs polymères fluorés thermoplastiques et
b. 5-50 % en poids d'un polymère acrylique,
dans laquelle le polymère fluoré a une viscosité à l'état fondu mesurée à 100 s⁻¹ et 230 °C à l'aide de la méthode ASTM D3835 de 0,04 à moins de 1 kPs.

2. Composition selon la revendication 1 dans laquelle ledit polymère fluoré est choisi parmi : les homopolymères et copolymères de fluorure de vinylidène (VDF) de préférence contenant au moins 50 % en poids de VDF, le copolymère étant choisi parmi le chlorotrifluoroéthylène (CTFE), l'hexafluoropropylène (HFP), le trifluoroéthylène (VF3) et le tétrafluoroéthylène (TFE) ; les homopolymères et copolymères de trifluoroéthylène (VF3) ; et les copolymères, et surtout les terpolymères, qui combinent les résidus des motifs chlorotrifluoroéthylène (CTFE), tétrafluoroéthylène (TFE), hexafluoropropylène (HFP) et/ou éthylène et éventuellement de motifs VDF et/ou VF3.

3. Composition selon l'une des revendications 1 ou 2 dans laquelle le polymère fluoré est un homopolymère de type poly(fluorure de vinylidène) (PVDF) ou un copolymère de fluorure de vinylidène avec de l'hexafluoropropylène (HFP) ou du tétrafluoroéthylène (TFE).

4. Composition selon l'une quelconque des revendications 1 à 3 dans laquelle ledit polymère acrylique est un homopolymère d'un méthacrylate de méthyle (MMA) ou un copolymère de méthacrylate de méthyle et d'au moins un autre monomère copolymérisable avec le MMA, ces copolymères contenant au moins 50 % de MMA en poids.

5. Composition de revêtement en poudre comprenant la composition selon l'une quelconque des revendications précédentes et qui comprend également de 5 à 30 % en poids d'un pigment.

6. Composition de revêtement en poudre selon la revendication 5 dans laquelle ledit pigment est choisi parmi le dioxyde de titane, les oxydes de fer, le titanate de plomb et les silicates.

7. Composition de revêtement en poudre selon l'une quelconque des revendications 5 ou 6, ladite composition comprenant en outre au moins un additif choisi parmi les absorbeurs UV, les photostabilisants, les agents de matité, les agents d'étalement, les agents de dégazage, les agents d'écoulement, les agents mouillants et les modificateurs de la résistance au choc.

8. Composition de revêtement en poudre selon l'une quelconque des revendications 5 à 7, ladite composition étant constituée de particules ayant une taille moyenne allant de 10 à 100 µm, de préférence de 15 à 80 µm, de préférence encore de 15 à 30 µm.

9. Procédé pour la préparation du revêtement en poudre utilisant la composition de revêtement en poudre selon l'une quelconque des revendications 5 à 8, ledit procédé comprenant les étapes consistant à :
i. préparer un mélange du polymère fluoré thermoplastique, du polymère acrylique, du pigment et éventuellement des additifs par mélange de ces constituants puis pastillage du mélange ou extrusion du mélange en feuilles ;
ii. broyer les pastilles ainsi obtenues dans un broyeur à marteaux à température ambiante pour obtenir une poudre ;
iii. recueillir la poudre à l'aide d'un tamis ayant une ouverture de 50 µm ;
iv. appliquer la poudre sur un substrat puis la soumettre à un traitement thermique afin de former un revêtement.

10. Procédé selon la revendication 9 dans lequel le substrat est constitué d'aluminium ou d'aluminium chromaté.

11. Procédé selon l'une quelconque des revendications 9 ou 10 dans lequel le traitement thermique consiste à faire cuire le substrat revêtu à une température comprise entre 220 et 260 °C pendant une durée comprise entre 5 et 20 minutes.

12. Procédé selon l'une quelconque des revendications 9 à 11 dans lequel le revêtement obtenu a une épaisseur allant de 30 à 1000 µm.

13. Revêtement **caractérisé en ce qu'**il résulte du durcissement d'au moins une composition de revêtement en poudre telle que définie selon l'une quelconque des revendications 5 à 8.
